Europäisches Patentamt

(19) European Patent Office

Office européen des brevets

(11) Publication number: **0 055 285**
**B1**

(12) **EUROPEAN PATENT SPECIFICATION**

(45) Date of publication of patent specification: **17.10.84**

(51) Int. Cl.³: **A 01 K 75/00, B 63 B 35/14**

(21) Application number: **81901926.6**

(22) Date of filing: **06.07.81**

(86) International application number:
**PCT/NO81/00029**

(87) International publication number:
**WO 82/00078 21.01.82 Gazette 82/03**

(54) **A SYSTEM FOR HANDLING OF FISHING GEARS.**

(30) Priority: **07.07.80 NO 802040**

(43) Date of publication of application:
**07.07.82 Bulletin 82/27**

(45) Publication of the grant of the patent:
**17.10.84 Bulletin 84/42**

(84) Designated Contracting States:
**FR**

(56) References cited:
**DE-B-2 338 356**
**FR-A-1 357 963**
**NO-B- 143 557**
**US-A-2 875 547**
**US-A-3 535 811**

(73) Proprietor: **BJÖRSHOL, Kolbjörn**
**N-6560 Langöyneset (NO)**

(72) Inventor: **BJÖRSHOL, Kolbjörn**
**N-6560 Langöyneset (NO)**

(74) Representative: **Lavoix, Jean et al**
**c/o Cabinet Lavoix 2, Place D'Estienne D'Orves**
**F-75441 Paris Cedex 09 (FR)**

Courier Press, Leamington Spa, England.

## Description

The present invention relates to a system for handling fishing gear, viz. the transfer of fishing gear in the form of a net into a bin aboard a vessel, and is particularly intended for use aboard pod or purse seine vessels in which it is of importance that gear, such as a seine which is to be hauled after use, may be cleared for new setting as quickly and simply as possible.

In connection with fishing gear provided with weights or sinkers along one edge, i.e. the ground, and with floats, such as cork floats, along the other edge, it is of importance that the gear, during setting, be disposed in an orderly manner in the gear bin, with the ground edge along one side of the vessel and the buoyed edge on the other. It is now usual for the gear to be drawn by means of a winch at one side of the vessel, then passed over an elevated pull roller arrangement at the end of a boom, and thence downwardly into a bin in which the gear is placed in an orderly manner by the crew, a task which is both heavy and cumbersome, as the gear is arriving at a relatively high speed, and may be very heavy.

A prior attempt to reduce this task has been made in DE—A—2338356 which discloses a system for handling a fishing net in a bin, wherein the top line of the net is pulled by and between two rotating ball rollers placed at a high point aboard the vessel and by two others rotating ball rollers, which are suspended lower and perform swinging movements.

The present invention relates to a system of the type which comprises a winch for hauling the net and a pull roller disposed at an elevated position relative to the winch for transferring the net to the bin, and which has a net positioning means caused to swing and situated between the pulling roller and the bin, the purpose of the invention being also to effectively avoid or substantially reduce the heavy manual labour of the prior systems. This is achieved, according to the present invention by the fact that the net positioning means is a net positioning chute extending downwardly between the pulling roller and bin, down which net from the pull roller is free to fall under its own weight due to gravity into the bin, means being provided to cause the net positioning chute to perform a swinging movement relative to the pulling roller in mutually angularly displaced planes. In such a system, the gear may be placed or stowed in orderly runs or turns in the bin, so that it may subsequently be set without forming tangles or other disorder.

The system embodying the invention preferably uses a net positioning chute in the form of a tube, which may be telescopic, and which is adapted to cooperate with jack means adapted to cause the tube to perform swinging movement for guiding the positioning of the gear in the bin.

In order that the invention may be more readily understood, an embodiment of a system applied to a pod or purse seine vessel will now be described with reference to the accompanying drawings, in which:—

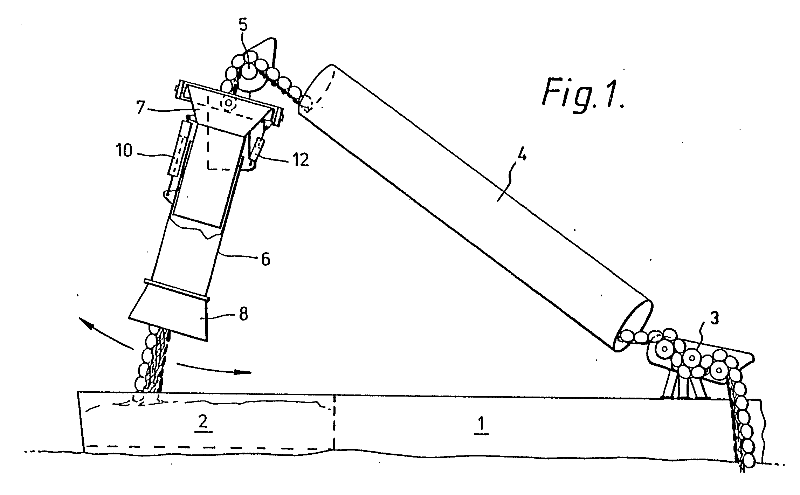

Fig. 1 is a side view of the system;

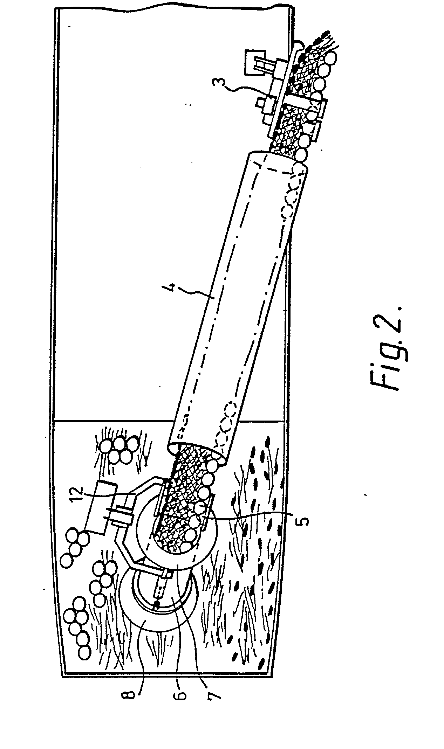

Fig. 2 is a plan view of the system;
Fig. 3 is a view of the system as seen from the left in Fig. 1, i.e. in the fore and aft direction of the vessel; and
Fig. 4 is a side view of a detail of the system.

In the drawing, 1 is the aft portion of a fishing vessel, in which a bin 2 is arranged for the reception of a net which may be hauled in by means of a winch 3 at the side of the vessel. Inboard of the winch 3, the net is carried through a tube 4 over a pull unit 5 positioned at an elevated position aboard the vessel, for instance at the end of a boom, and is then conveyed to the bin 2. The seine is to be set out from the bin 2.

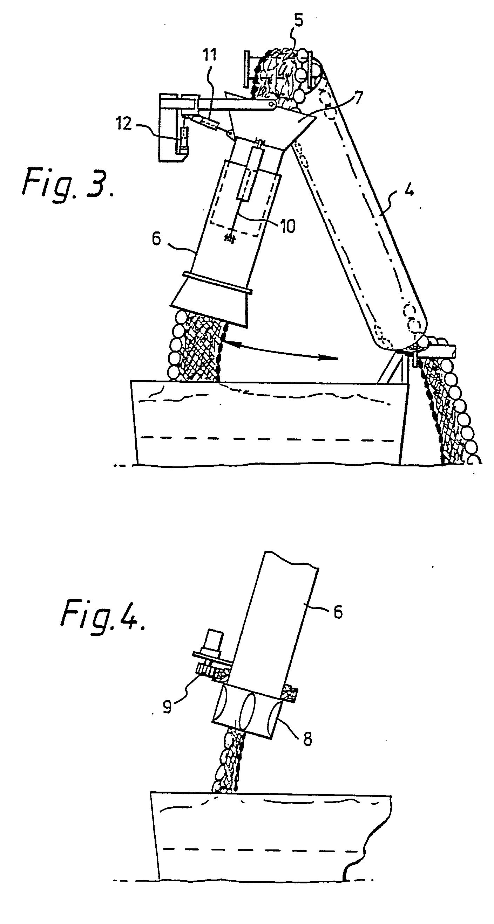

The pull unit 5 is associated with a net positioning chute extending downwardly between the unit 5 and the bin 2, in the form of a tube 6, down which the net is free to fall or slide under its own weight due to gravity. The tube may be monolithic, in one piece, or, as shown, telescopic so as to adapt to the distance between the unit 5 and the various points in directions athwart and fore-and-aft of the vessel, where the net is to be placed in the bin, and to the amount of net stowed, for example piled, in the bin 2. The tube 6 is provided with an inlet collar 7, and an outlet nozzle 8 which may be provided with means 9 (Fig. 4), coaxial with the tube 6 and rotatable about the longitudinal axis thereof, adapted to twist the net so as to facilitate the positioning of the net in the bin 2.

Means are provided, associated with the tube 6, for the purpose of varying the length of the tube 6 and for swinging the same relative to the pull roller in mutually displaced planes, i.e. in athwart and fore-and-aft directions during the hauling of the net and the placing of the same in the bin 2. The latter means comprises jacks, for example hydraulic piston-and-cylinder means 10, 11 and 12 as shown, which respectively effect adjustment of the tube length, and swinging of the tube 6 in athwart and fore-and-aft directions so that the net is placed in the bin 2 with the ground edge of the net towards the same side of the vessel as the winch 3 and the buoyed edge towards the opposite side. Thus, utilisation of the bin is maximised, and the subsequent paying out of the net may be performed without difficulties.

In the embodiment shown, the nozzle 8 is positioned at the outlet of the tube 6. However, it may prove advantageous to position the means for twisting the gear at an earlier point during the advance of the gear, for instance along the length of the tube 6, or even in the guide tube 4.

## Claims

1. A system for guided positioning of fishing gear in the form of a net in a bin (2) aboard a vessel (1) including a winch (3) for hauling the net and a pulling roller (5) disposed at an elevated position relative to the winch for transferring the net to the bin and having a net positioning means (6) caused to swing and situated between the pulling roller (5) and the bin (2), caracterized in that the net positioning means is a net positioning chute (6), said chute extending downwardly between the pulling roller and the bin down which the net is free to fall by its own weight due to gravity into the bin, and in that there are means for causing (10, 11, 12) the net positioning chute to perform a swinging movement relative to the pulling roller (5) in mutually angularly displaced planes.

2. A system as claimed in claim 1, further characterized in that the net positioning chute (6) is in the form of a monolithic tube.

3. A system as claimed in claim 1, further characterized in that the net positioning chute (6) is in the form of a telescopic tube.

4. A system as claimed in claim 1, further characterized in that the net positioning chute (6) is provided with a tubular outlet (8) which is coaxial with the net positioning chute and rotatable about the longitudinal axis of the chute.

5. A system as claimed in claim 2 or 3, characterized in that the net positioning chute (6) is provided with a tubular outlet (8) which is coaxial with the net positioning chute and rotatable about the longitudinal axis of the same.

6. A system as claimed in claim 1, 2, 3 or 4, characterized in that said means for causing (10, 11, 12) the net to swing includes jacks operable to swing the chute in direction athwart and fore-and-aft of the vessel.

7. A system as claimed in claim 6, characterized in that the net positioning chute (6) is in the form of a telescopic tube, and including a jack (10) for adjusting the length of the telescopic tube.

8. A system as claimed in claim 6, characterized in that the net positioning chute (6) is in the form of a telescopic tube and is provided with a tubular outlet (8) which is coaxial with the net positioning chute and rotatable about the longitudinal axis of the chute, and including a jack (10) for adjusting the length of the telescopic tube.

## Revendications

1. Un dispositif pour le positionnement guidé d'un engin de pêche sous la forme d'un filet dans un compartiment (2) situé à bord d'un bateau (1), comprenant un treuil (3) servant à haler le filet et un rouleau de traction (5) disposé en un point élevé par rapport au treuil pour transférer le filet au compartiment et comportant des moyens de positionnement du filet (6) que l'on fait osciller et qui sont situés entre le rouleau de traction (5) et le compartiment (2), caractérisé en ce que les moyens de positionnement du filet sont une goulotte de positionnement du filet (6), ladite goulotte s'étendant vers le bas entre le rouleau de traction et le compartiment, et la long de laquelle le filet est libre de tomber sous l'effet de son propre poids, par gravité, dans le compartiment, et en ce que des moyens (10, 11, 12) sont prévus pour obliger la goulotte de positionnement du filet à exécuter un mouvement d'oscillation par rapport au rouleau de traction (5) dans des plans décalés angulairement les uns par rapport aux autres.

2. Un dispositif tel que revendiqué à la revendication 1, caractérisé en ce que la goulotte (6) de positionnement du filet est sous la forme d'un tube monolithique.

3. Un dispositif tel que revendiqué à la revendication 1, caractérisé en ce que la goulotte (6) de positionnement du filet est sous la forme d'un tube télescopique.

4. Un dispositif tel que revendiqué à la revendication 1, caractérisé en ce que la goulotte (6) de positionnement du filet est munie d'une sortie tubulaire (8) qui est coaxiale à la goulotte de positionnement du filet et qu'on peut faire tourner autour de l'axe longitudinal de la goulotte.

5. Un dispositif tel que revendiqué à la revendication 2, caractérisé en ce que la goulotte (6) de positionnement du filet est munie d'une sortie tubulaire (8) qui est coaxiale à la goulotte de positionnement du filet et qu'on peut faire tourner autour de l'axe longitudinal de celui-ci.

6. Un dispositif tel que revendiqué à la revendication 1, 2, 3 ou 4, caractérisé en ce que lesdits moyens (10, 11, 12) faisant osciller le filet comprennent des vérins que l'on peut actionner pour faire osciller la goulotte dans la direction en travers et la direction avant-arrière du navire.

7. Un dispositif tel que revendiqué à la revendication 6, caractérisé en ce que la goulotte (6) de positionnement du filet est sous la forme d'un tube télescopique et un vérin (10) est prévu pour ajuster la longueur du tube télescopique.

8. Un dispositif tel que revendiqué à la revendication 6, caractérisé en ce que la goulotte (6) de positionnement du filet est sous la forme d'un tube télescopique et est munie d'une sortie tubulaire (8) qui est coaxiale à la goulotte de positionnement du filet et qu'on peut faire tourner autour de l'axe longitudinal de la goulotte, cette goulotte comprenant un vérin (10) servant à ajuster la longueur du tube télescopique.

## Patentansprüche

1. Einrichtung zur geführten Anordnung von Fischgerät in Form eines Netzes in einem Ablagebehälter (2) an Bord eines Schiffes (1), welche eine Winsch (3) zum Anholen des Netzes und eine in erhöhter Stellung gegenüber der Winsch angeordnete Zugrolle (5) zum Überführen des Neztes in den Ablagebehälter umfaßt und schwenkende Netzanordnungsmittel (6), welche zwischen der Zugrolle (5) und dem Ablagebehälter (2) angeordnet sind, aufweist, dadurch gekennzeichnet, daß die Netzanordnungsmittel eine Netzpositionierrutsche (6) sind, wobei sich die Rutschezwischen der Zugrolle und dem Ablagebehälter nach unten erstreckt und in ihr das Netz durch sein eigenes Gewicht infolge der Schwerkraft nach unten in den Ablagebehälter fallen kann, und daß Mittel (10, 11, 12) vorgesehen sind, die bewirken, daß die Netzpositionierrutsche in bezug auf die Zugrolle (5) eine schwenkende Bewegung in wechselseitig winkelmäßig versetzten Ebenen durchführt.

2. Einrichtung nach Anspruch 1, ferner dadurch gekennzeichnet, daß die Netzpositionierrutsche (6) in Form eines einstückigen Rohres vorliegt.

3. Einrichtung nach Anspruch 1, ferner dadurch gekennzeichnet, daß die Netzpositionierrutsche (6) in Form eines ineinanderschiebbaren Rohres vorliegt.

4. Einrichtung nach Anspruch 1, ferner dadurch gekennzeichnet, daß die Netzpositionierrutsche (6) mit einem rohrförmigen Auslaß (8) versehen ist, welcher zur Netzpositionierrutsche koaxial und um eine Längsachse der Rutsche drehbar ist.

5. Einrichtung nach Anspruch 2 oder 3, dadurch gekennzeichnet, daß die Netzpositionierrutsche (6) mit einem rohrförmigen Auslaß (8) versehen ist, welcher mit der Netzpositionierrutsche koaxial und um die Längsachse derselben drehbar ist.

6. Einrichtung nach Anspruch 1, 2, 3 oder 4, dadurch gekennzeichnet, daß die Mittel (10, 11, 12), die das Schwenken des Netzes bewirken, Winden umfassen, die die Rutsche längs- und querschiffs schwenkend betreibbar sind.

7. Einrichtung nach Anspruch 6, dadurch gekennzeichnet, daß die Netzpositionierrutsche (6) in Form eines zusammenschiebbaren Rohres vorliegt und eine Winde (10) zur Einstellung der Länge des zusammenschiebbaren Rohres umfaßt.

8. Einrichtung nach Anspruch 6, dadurch gekennzeichnet, daß die Netzpositionierrutsche (6) in Form eines zusammenschiebbaren Rohres vorliegt und mit einem rohrförmigen Auslaß (8) versehen ist, welcher mit der Netzpositionierrutsche koaxial und um die Längsachse der Rutsche drehbar ist, und eine Winde (10) zur Einstellung der Länge des zusammenschiebbaren Rohres enthält.

Fig.1.

Fig.2.

0055285

Fig. 3.

Fig. 4.